# EUROPEAN PATENT SPECIFICATION

(11) **EP 1 808 338 B1**
(45) Date of publication and mention of the grant of the patent: **04.08.2010**
(21) Application number: 07100397.4
(22) Date of filing: 11.01.2007
(51) Int. Cl.: B60R 16/03, G06F 1/32

(54) **Power management system for in-vehicle apparatus and in-vehicle apparatus**
Leistungssteuerungssystem für eine Vorrichtung in einem Fahrzeug und eine solche Vorrichtung
Système de gestion d'énergie pour un appareil dans un véhicule automobile et appareil correspondant

(30) Priority: 13.01.2006 JP 2006006527
(43) Date of publication of application: 18.07.2007
(73) Proprietor: Aisin AW Co., Ltd., Fujii-cho Anjo-shi, Aichi 444-1192 (JP)
(72) Inventor: Asai, Hiroyuki, Okazaki Aichi 444-8564 (JP)
(74) Representative: TBK-Patent

(56) References cited:
- EP-A1- 0 515 042
- EP-A2- 0 140 814

## Description

The present invention relates to a power management system for in-vehicle apparatuses for controlling the power supplied to the in-vehicle apparatuses, and the in-vehicle apparatuses. In particular, the power management system controls the power supplied to the in-vehicle apparatuses except in the case of an in-vehicle apparatus which does not send condition information that the in-vehicle apparatus is ready for turning off, so that the power management system may conserve the power of the vehicle's battery.

Hitherto, various types of in-vehicle apparatus have been mounted on vehicles to make drivers and fellow passengers in the vehicle more comfortable. For example, a radio receiver for receiving AM broadcast and FM broadcast, a TV receiver for receiving telecast signals and displaying an image, an audio device for playing an MD and/or a CD, and/or a navigation apparatus for providing driving guidance for the vehicle may be mounted on the vehicle as the in-vehicle apparatuses.

To transfer digital data such as digitized image data, audio data, or computer data among the various types of in-vehicle apparatus described above, large-capacity and high-speed communication is required. Therefore, the introduction of an in-vehicle network to transfer digital data even in a small space such as in a vehicle is under way in earnest. For example, the MOST (Media Oriented Systems Transport) system is an example of an in-vehicle network (for example, Japanese Unexamined Patent Application Publication No. 2005-277711). The MOST system has a cyclic network and various in-vehicle apparatuses such as a navigation apparatus, an audio device, a radio receiver, and an AV amplifier are connected to each other. For example, digital data output from the audio device is transferred to the AV amplifier through the network and the signal input by the AV amplifier is amplified and output to a speaker.

Further, the MOST system is a network protocol using fiber optics and the in-vehicle apparatuses described above are connected to each other therein, so that there are numerous benefits to a user. For example, the use of the MOST system results in a reduction in the weight of a wire harness for connecting components to each other and reduction in noise, and the burden on the developer of the system may be also reduced. As a result, the user may have means for intensively controlling various devices.

For example, the communication system described above controls the power of the entire system collectively instead of turning on/off the power supplied to each of the in-vehicle apparatuses in the system. For example, each in-vehicle apparatus and a power management unit for controlling the power of the system are connected to each other with an LAN or the MOST, and request data for turning on/off the power supplied to each of the in-vehicle apparatuses is transferred from the power management unit, so that all of the connected in-vehicle apparatuses may be turned on or off.

However, according to the power management system using the power management unit described above, when a program reset repeatedly occurs in any one of the in-vehicle apparatuses due to some sort of program factor, the power management unit recognizes that a new in-vehicle apparatus is connected to the power management unit every time the program reset occurs. As a result, every time the power management system recognizes the new connection of an in-vehicle apparatus, the power management system continuously provides registration processing for such a newly connected in-vehicle apparatus. Note that, before the power management unit turns each of the in-vehicle apparatuses off, the power management unit needs to receive responses that the connected in-vehicle apparatuses are ready for turning off from the connected in-vehicle apparatuses and needs to send request data to turn the in-vehicle apparatuses off. However, when the series of resets occurs as described above, the reset in-vehicle apparatus cannot send the response that the in-vehicle apparatus is ready for turning off. Further, because registration processing for the in-vehicle apparatus is repeatedly executed by the power management unit, the power management unit cannot send request data to turn the in-vehicle apparatus off. As a result, the power of the entire system cannot be turned off.

Document EP 0 515 042 A discloses that a data communication system for use on a motor vehicle includes at least one master unit and a plurality of slave units which are connected to a communication bus. The master unit has an operation detector for detecting when an operation switch of the data communication system is turned on or off, and outputting a detected operation signal corresponding to the turn-on or turn-off of the operation switch, an operation mode controller for outputting an operation mode control signal through the communication bus to control operation of the data communication system based on the detected operation signal, and a first operation mode changer controlled by the operation mode control signal for switching the data communication system into a normal operation mode when the operation switch is turned on, and for switching the data communication system into a low power consumption mode when the operation switch is turned off. Each of the slave units has a second operation mode changer controlled by the operation mode control signal received through the communication bus, for switching the data communication system into the normal operation mode when the operation switch is turned on, and for switching the data communication system into the low power consumption mode when the operation switch is turned off.

Document EP 0 140 814 A discloses that a control system, as for controlling automotive body functions, is powered by a limited capacity electrical power source and is structured and controlled in a manner to minimize consumption of electrical power. The control system conducts data transactions between a central control station and one or more remote controllers connected therewith, and the central control station includes a provision for electronic signal processing for controlling the data transactions with the remote controllers. A power FET is operatively connected to the power source and to a portion of the control system for selectively connecting or disconnecting power to that control system portion. The system employs a NMOS microprocessor. The portion of the control system from which power may be disconnected will typically include the processor. The level of system activity is monitored and a power-down, or "sleep" control signal is automatically provided if a predetermined condition of inactivity occurs. That power-down control signal is operatively applied to certain control circuitry for in turn causing the power switch to disconnect power when the power-down control results. Correspondingly, a timer, which preferably is continuously powered, times a "sleep" interval during which power is disconnected from the relevant control system portion and generates a power-up control signal at the end of some predetermined time. The control circuitry responds to this power-up control signal by causing the power switch to reapply power to the previously disconnected portions of the control system.

Accordingly, it is an object for the present invention to provide a power management system for an in-vehicle apparatus and the in-vehicle apparatus for turning the power of the entire system off and preventing the battery of the vehicle from running out. It is a further object that the power management system can turn off the power of the entire system even when a series of program reset occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device.

To solve the problems described above, according to an aspect of the invention, there is provided a power management system as defined in claim 1. According to another aspect, there is provided an in-vehicle apparatus as defined in claim 3. Further aspects and features of the invention are set out in the dependent claims.

A power management system of an in-vehicle apparatus sets the in-vehicle apparatus, which does not send condition information indicating that the in-vehicle apparatus is ready for turning off, not to communicate with the power management device, determines whether in-vehicle apparatuses except the in-vehicle apparatus which is set not to communicate with the power management device are ready for turning off, and turns such in-vehicle apparatuses off after determining that such in-vehicle apparatuses are ready for turning off. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system may be turned off. As a result, the power-on state of the in-vehicle apparatuses may not continue after the vehicle engine stops and it may conserve the power of the vehicle's battery.

The power control system of the in-vehicle apparatuses determines whether in-vehicle apparatuses except an in-vehicle apparatus, which is set not to respond to the communication provided by the power management device, are ready for turning off and turns the in-vehicle apparatuses off after determining that the in-vehicle apparatuses are ready for turning off. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system may be turned off. As a result, the power-on state of the in-vehicle apparatuses may not continue after the vehicle engine stops and it may conserve the power of the vehicle's battery.

The power control system of in-vehicle apparatuses turns the in-vehicle apparatuses off when it is determined that in-vehicle apparatuses except an in-vehicle apparatus which is reset a predetermined number of times within a predetermined time period are ready for turning off. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system may be turned off. As a result, the power-on state of the in-vehicle apparatuses may not continue after the vehicle engine stops and it may conserve the power of the vehicle's battery.

When the in-vehicle apparatus does not send condition information indicating that the in-vehicle apparatus is ready for turning off, the in-vehicle apparatus sets the power management device not to communicate. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system including other in-vehicle apparatuses may be turned off. As a result, the power-on state of the in-vehicle apparatuses may not continue after the vehicle engine stops and it may conserve the power of the vehicle's battery.

When the in-vehicle apparatus does not send condition information indicating that the in-vehicle apparatus is ready for turning off, the in-vehicle apparatus sets the power management device not to communicate. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system including other in-vehicle apparatuses may be turned off. As a result, the power-on state of the in-vehicle apparatuses may not continue after the vehicle engine stops and it may conserve the power of the vehicle's battery.

When the in-vehicle apparatus resets a predetermined number of times within a predetermined time period, the in-vehicle apparatus sets the power management device not to communicate. Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system including other in-vehicle apparatuses may be turned off. As a result, the power-on state of the in-vehicle apparatuses may not continue after the vehicle engine stops and it may conserve the power of the vehicle's battery.

FIG. 1 is a structure outline of a power control system according to the first embodiment of the invention.

FIG. 2 is a block diagram showing control structures of an in-vehicle apparatus and a communication master device in the power control system according to the first embodiment of the invention.

FIG. 3 is a flowchart showing a series of reset processing program executed by the in-vehicle apparatus according to the first embodiment of the invention.

FIG. 4 is a flowchart showing a power management processing program executed by the communication master device and the in-vehicle apparatuses according to the first embodiment of the invention.

FIGs. 5A and 5B are diagrams showing recognition processing for the in-vehicle apparatus connected to the communication master device.

FIG. 6 is a flowchart showing a power management processing program executed by the communication master device and the in-vehicle apparatus according to the second embodiment of the invention.

A first embodiment and a second embodiment of the present invention according to a power management system and an in-vehicle apparatus are described with reference to the figures below.

### The first embodiment

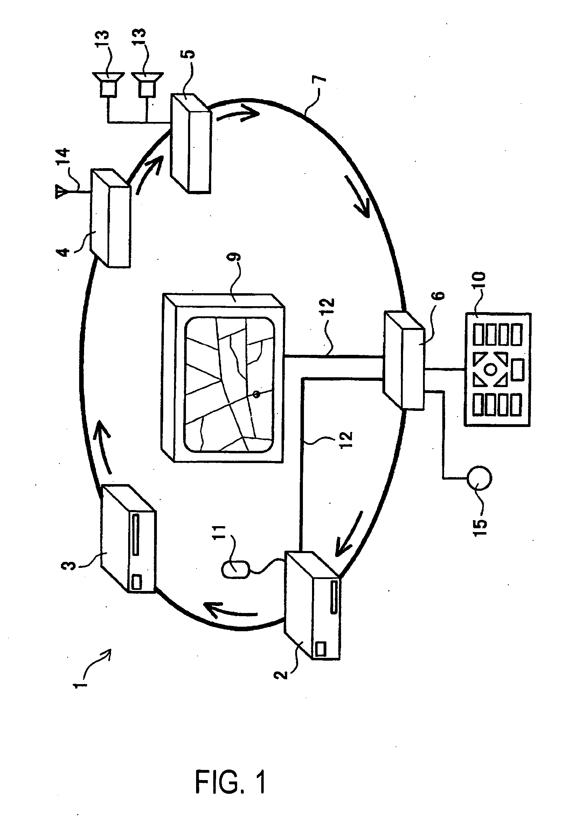

First, a structure outline of a power control system 1 according to the first embodiment is described with reference to FIG. 1. FIG. 1 is a diagram showing a structure outline of the power control system 1 according to the first embodiment.

As shown in FIG. 1, the power control system 1 according to the first embodiment has an in-vehicle network including a navigation apparatus 2, a CD player 3, a radio tuner 4, and an AV amplifier 5 as in-vehicle apparatuses mounted in a vehicle, and a communication master device (power management device) 6 for communicating and controlling each of the in-vehicle apparatuses 2 - 5, a communication network 7 for circularly connecting each of the in-vehicle apparatuses 2 - 5 and the communication master device 6.

The communication network 7 is a data communication network including, for example, the MOST system. The communication master device 6 includes a monitor device 9 for displaying images and a controller 10 which has a plurality of buttons operated by a user.

The navigation apparatus 2 is an in-vehicle apparatus for providing route guidance to a destination set by the user and a GPS 11 is connected to the navigation apparatus 2. The GPS 11 receives position information according to a current vehicle position. The navigation apparatus 2 reads out map information for the area surrounding the current vehicle position from map information storage means such as an internal CD, a DVD, or a hard disk drive on the basis of the received position information and transfers image data (map data) to the monitor device 9 through a transmission line on the basis of the read out information, so that the map and the current vehicle position are displayed on the monitor device 9. The navigation apparatus 2 transfers audio data of the route guidance to the AV amplifier 5 through the communication network 7. The AV amplifier 5 amplifies the input signal and a speaker 13 outputs an audio guidance. The CD player 3 is an audio device for playing a CD. The CD player 3 reads out digital data from the CD and transfers the digital data to the AV amplifier 5 through the communication network 7. The AV amplifier 5 amplifies the input signal and the speaker 13 outputs an audio message or music. The radio tuner 4 is a receiver for receiving radio broadcasting. The radio tuner 4 transfers a signal of an AM/FM broadcast received by an antenna 14 to the AV amplifier 5 through the communication network 7. The AV amplifier 5 amplifies the input signal and the speaker 13 outputs an audio message or music. The AV amplifier 5 is an amplifier for amplifying an input audio signal and the speaker 13 is connected to the AV amplifier 5. The AV amplifier 5 amplifies digital data input from the navigation apparatus 2, the CD player 3, and/or the radio tuner 4 and outputs the digital data from the speaker 13.

The communication master device 6 is a control device for communicating with each of the in-vehicle apparatuses 2 - 5 via the communication network 7 and controlling the in-vehicle apparatuses 2 - 5. The monitor device 9 and/or the controller 10 are connected to the communication master device 6. When the user operates the controller 10, the communication master device 6 requests each in-vehicle apparatus such as the navigation apparatus 2 or the CD player 3 to start various programs on the basis of the operation by the user. The communication master device 6 stores image data in an internal storage device and displays various types of image corresponding to the running in-vehicle apparatuses (except the navigation apparatus 2) on the monitor device 9. (For example, a title of a song and/or the number of tracks are displayed while the CD player 3 is running, and a frequency and/or a name of a radio station are displayed while the radio tuner is running.) The communication master device 6 according to the first embodiment controls the power-on/off state of the in-vehicle apparatuses 2 - 5. More specifically, a key switch 15 is connected to the communication master device 6 for turning on/off a vehicle ignition or an ACC (accessory). When the ACC is on, the communication master device 6 transfers a data signal over the communication network 7 and requests the in-vehicle apparatuses 2 - 5 to turn on. When the ACC is off, the communication master device 6 stops transferring the data signal over the communication network 7 and requests the in-vehicle apparatuses 2 - 5 to turn off. Note that a gateway ECU as an interface for receiving a vehicle signal or a diagnosis such as a CAN may be connected to the communication network 7 and the key switch 15 may be connected to the gateway ECU.

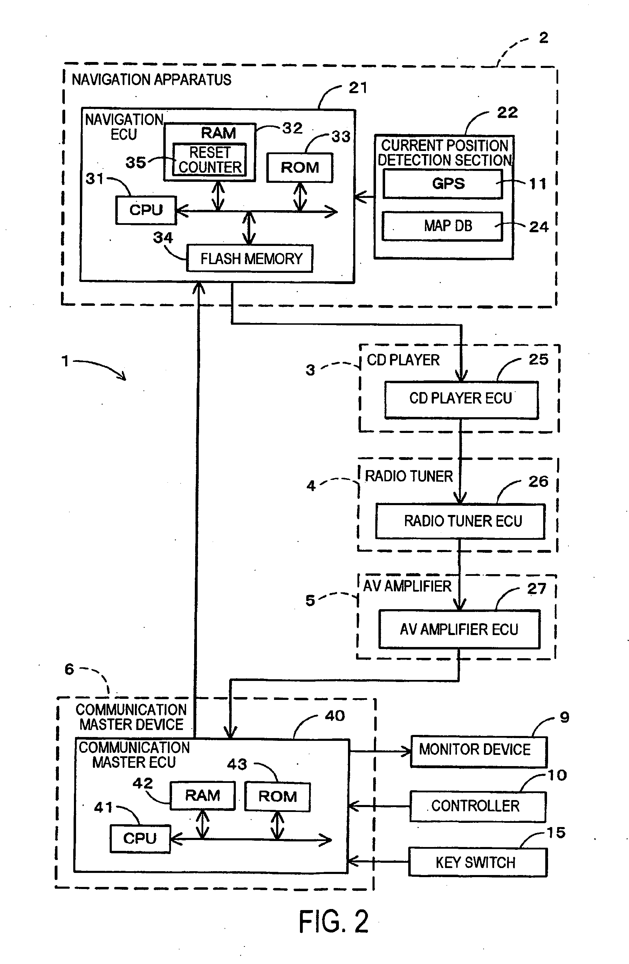

Next, control structures of the in-vehicle apparatuses 2 - 5 and the communication master device 6 in the power control system 1 according to the first embodiment will be described with reference to FIG. 2. FIG. 2 is a diagram showing the control structures of the in-vehicle apparatuses 2 - 5 and the communication master device 6 in the power control system 1 according to the first embodiment.

First, the control structure of the navigation apparatus 2 will be described with reference to FIG. 2. The navigation apparatus 2 basically includes a navigation ECU (electronic control unit) 21 and a current position detection section 22.

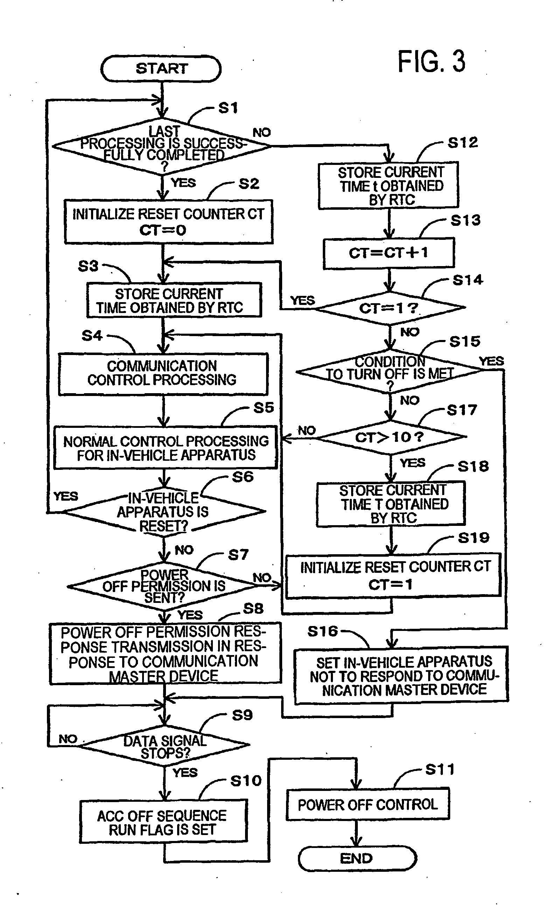

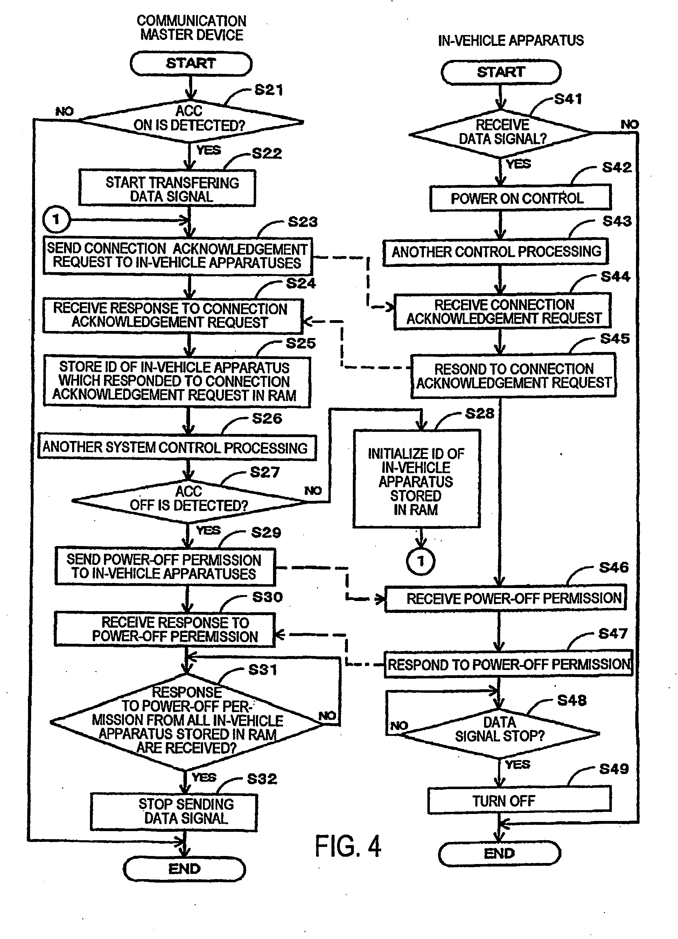

The navigation ECU (power condition transfer means, communication setting means, counting means, reset number determining means) 21 includes a CPU 31 as a calculating device and a control device for controlling the entire navigation apparatus 2 and an internal storage device such as an RAM 32, an ROM 33, and/or a flash memory 34. The RAM 32 is used as a working memory when the CPU 31 executes various calculations, and in the RAM 32, route data for a searched route, information regarding a starting time of a series of program resets caused by a program factor or a non-program factor, and a reset counter 35 for counting the number of resets may be stored. In the ROM 33, a control program, a series of reset processing programs (FIG. 3) for setting an in-vehicle apparatus not to respond to a communication from the communication master device 6 and for turning the in-vehicle apparatus off when the series of resets occurs, and a power management control program (FIG. 4) for controlling the power-on/off state of the in-vehicle apparatuses on the basis of the communication provided by the communication master device 6 may be stored. In the flash memory 34, a program read out from the ROM 33 may be stored. Note that, a semiconductor memory or a magnetic core may be used as the RAM 32, the ROM 33, or the flash memory 34. Further, an MPU may be used as the calculating device and the control device instead of the CPU 31.

When the communication master device 6 sends a data signal through the communication network 7 (more specifically, when it is ordered that the navigation apparatus 2 should be turned on), the navigation ECU 21 controls the navigation apparatus 2 to turn on (FIG. 4). Meanwhile, when the communication master device 6 stops transferring the data signal (more specifically, when it is ordered that the navigation apparatus 2 is turned off), the navigation ECU 21 controls the navigation apparatus 2 to turn off. Further, when a series of program resets occurs a predetermined number of times (equal to or more than 11 times in the first embodiment) within a predetermined time period (60 seconds in the first embodiment) due to a program factor or a non-program factor (for example, when a system reset occurs due to a hardware error when just accessing a software), the navigation ECU 21 sets the in-vehicle apparatus not to respond to the communication provided by the communication master device 6 and controls the navigation apparatus 2 to turn off (FIG. 3).

A current position detection section 22 includes the GPS 11 for detecting a current vehicle position and a current time by receiving an electric wave provided by a satellite and a map DB 24 for storing map data, so that it may be possible to specify the current vehicle position and the travel direction of the vehicle on the map.

Next, the control structure of the communication master device 6 will be described with reference to FIG. 2. The communication master device 6 may basically include a communication master ECU 40 and various types of additional device such as the monitor device 9, the controller 10, or the key switch 15 connected to the communication master ECU 40.

The communication master ECU (power-off detection means, power-off request means) 40 may include a CPU 41 as a calculating device and a control device for controlling the entire communication master device 6 and an internal storage device such as an RAM 42, and/or an ROM 43. The RAM 42 is used as a working memory when the CPU 41 executes various calculations, and in the RAM 42, IDs of in-vehicle apparatuses which respond to a connection acknowledgement request among the in-vehicle apparatuses 2 - 5 may be stored. In the ROM 43, a control program and a power management control program (FIG. 4) for controlling the power-on/off state of the in-vehicle apparatuses by communicating with each of the in-vehicle apparatuses connected to the communication network 7 may be stored.
Note that, a semiconductor memory or a magnetic core may be used as the RAM 42 or the ROM 43. Further, an MPU may be used as the calculating device and the control device instead of the CPU 41.

The communication master ECU 40 sends a connection acknowledgement request to each of the in-vehicle apparatuses 2 - 5 via the communication network 7 described later and stores the IDs of the in-vehicle apparatuses which respond to the connection acknowledgment request among the in-vehicle apparatuses 2 - 5, so that the communication master ECU 40 may recognize which in-vehicle apparatus is currently connected. Further, when ACC is on, the communication master ECU 40 starts sending data signals over the communication network 7 and requests each of the in-vehicle apparatuses 2 - 5 to turn on. When ACC is off, the communication master ECU 40 sends a power-off permission to each of the in-vehicle apparatuses 2 - 5 via the communication network 7. Then after all of the in-vehicle apparatuses which are currently connected to the communication master ECU 40 respond to the permission, the communication master ECU 40 stops sending data signals over the communication network 7 and requests each of the in-vehicle apparatuses 2 - 5 to turn off (FIG. 4).

The CD player 3 may basically include a CD player ECU 25. The radio tuner 4 may basically include a radio tuner ECU 26. The AV amplifier 5 may basically include an AV amplifier ECU 27. Note that although the details of the CD player ECU 25, the radio tuner ECU 26, and the AV amplifier ECU 27 are not described here, each of the ECUs may includes a CPU and an internal storage device such as an RAM, an ROM, and/or a flash memory as in the case of the navigation ECU 21. Further, in the RAMs of those in-vehicle apparatuses, a storage range for storing a starting time of a series of program resets due to, for example, a program factor and a reset counter for counting the number of resets may be included as in the case of the navigation apparatus. Further, in the ROM, a series of reset processing programs (FIG. 3) and a power management control program (FIG. 4) described later may be stored as in the case of the navigation apparatus.

Next, series of reset processing program executed by each of the ECUs 21 and 25 - 27 of the in-vehicle apparatuses (the navigation apparatus 2, the CD player 3, the radio tuner 4, and the AV amplifier 5 in the first embodiment) in the power control system 1 having the structure described above according to the first embodiment will be described with reference to FIG. 3. FIG. 3 is a flowchart showing the series of reset processing program executed by the in-vehicle apparatuses 2 - 5 according to the first embodiment. The series of reset processing program is a program for setting the in-vehicle apparatuses not to respond to the communication provided by the communication master device 6 and for turning the in-vehicle apparatuses off when the series of program reset occurs due to a program factor or a non-program factor (for example, when a system reset occurs due to a hardware error when just accessing a software). Note that, the program shown in the flowchart of FIG. 3 is stored in the ROMs and/or the RAMs of the ECUs 21 and 25 - 27 and executed by the CPUs after the in-vehicle apparatuses corresponding to the CPUs are turned on.

In the series of reset processing program, the CPU determines whether the program is properly terminated without resetting in Step 1 (hereinafter referred to as S1). More specifically, when an ACC off sequence run flag is set on a procedure in S10 described later and when the power is properly turned off, it is determined that the program is properly terminated.

When it is determined that the program is properly terminated (S1=YES), the reset counter in the RAM is initialized and the counter value (CT) is set as "0" (S2).

In S3, the CPU stores a current time T obtained by an RTC (Real Time Clock) in the RAM. Note that, the current time T stored in the RAM in S3 is used in S15 as a starting time of a series of resets while it is determined whether a condition for turning off is met or not. In S4, a communication control processing for responding to a connection acknowledgment request provided by the communication master device 6 or for receiving a request to start various types of control program is executed.

In S5, the CPU executes standard control processing for in-vehicle apparatuses corresponding to communication control processing in S4. More specifically, for example, the navigation apparatus 2 executes a destination setting processing, a route search processing, and/or a guidance processing along the route on the basis of the instruction from the communication master device 6. The CD player 3 plays a CD, pauses the CD, and/or fast-forwards the CD on the basis of the instruction from the communication master device 6.

In S6, the CPU determines whether the program is reset due to a program factor or a non-program factor (for example, when a system reset occurs due to a hardware error when just accessing a software).

When it is determined that the program is reset (S6=YES), the procedure returns to S1. When it is determined that the program is not reset (S6=NO), the procedure goes to S7.

In S7, the CPU determines whether the power-off permission sent from the communication master device 6 is received. When it is determined that the power-off permission is not received (S7=NO), the procedure returns to S4 and various control processing is again executed. When it is determined that the power-off permission is received (S7=YES), the CPU sends response to the power-off permission to the communication master device 6 and informs the communication master device 6 of being ready for turning off (S8).

In S9, it is determined whether data signal transfer on the communication network 7 is terminated, that is, whether the communication master device 6 requests for turning the in-vehicle apparatus off. When it is determined that data signal transfer is not terminated (S9=NO), the procedure does not progress until the data signal transfer is terminated. When it is determined that data signal transfer is terminated (S9=YES), the procedure goes to S10.

In S10, the ACC off sequence run flag is set on the basis of the completion of the program. In S11, the CPU turns off the in-vehicle apparatus.

When it is determined that the program is not successfully terminated in S1 (S1=NO), that is, it is determined that the program is reset and crashed, the current time t obtained by the RTC is stored in the RAM (S12). Note that, the current time t stored in the RAM in S12 is used as a starting time of last reset while it is determined whether the power-off condition is met in S15. In S13, "1" is added for the reset counter value (CT) in the RAM.

In S14, it is determined whether the count of the reset counter (CT) in the RAM is 1, that is, whether the first program reset occurs after the program is terminated. When it is determined that the count of the reset counter (CT) in the RAM is 1 (S14=YES), the procedure returns to S3 to store the starting time T of the series of resets.

When it is determined that the count of the reset counter (CT) in the RAM is other than 1 (S14=NO), it is further determined whether the power-off condition is met (S15). The power-off condition here means a condition to determine whether a response to the power-off permission can be sent to the communication master device 6. More specifically, the condition in the first embodiment is that the series of program resets occurs a predetermined number of times (equal to or more than 11 times in the first embodiment) within a predetermined time period (60 seconds in the first embodiment). Then, when "t<T+60 sec" is true according to the starting time T of the series of resets stored in S3 or S18 and the starting time t of the last reset stored in S12, and when the count of the reset counter (CT) is greater than 10 (CT>10), it is determined that the power-off condition is met.

When it is determined that the power-off condition is met (S15=YES), the in-vehicle apparatus is set not to respond to the communication provided by the communication master device 6 (S16) and the procedures goes to S9. Note that, the in-vehicle apparatus set not to respond to the communication provided by the communication master device 6 in S9 is not recognized by the communication master device 6 as an in-vehicle apparatus connected to the communication network 7 (S25 in FIG. 4), so that even if any one of the in-vehicle apparatuses is repeatedly reset, the communication master device 6 stops transferring a data signal and requests the entire power control system 1 to turn off. The processing in S16 is operated by communication setting means.

When it is determined that the power-off condition is not met (S15=NO), it is further determined whether the count of the reset counter CT is greater than 10 (CT>10), that is, whether it takes equal to or more than 60 seconds for the in-vehicle apparatus to be repeatedly reset equal to or more than 11 times (S17). Note that, the processing in S17 is operated by reset number determining means.

As a result, when it is determined that the count of the reset counter CT is greater than 10 (CT>10) (S17=YES), the CPU stores the current time T obtained by the RTC to re-count the number of the series of resets (S18). In S19, the CPU initializes the count of the reset counter (CT) in the RAM and set the count as "1" (S19). Then the procedure goes to S4. Note that, the current time T stored in the RAM in S18 is used as a starting time of the series of resets while it is determined whether the power-off condition is met in S15. The processing in S2, S13, and S19 is operated by counting means.

When it is determined that the count of the reset counter (CT) is equal to or less than 10 (CT>10) (S17=NO), that is, that the number of the reset during the series of resets is less than 11 times since the number of times starts being counted, the procedures goes to S4 and the number of reset is ongoingly counted.

Next, a power management control program executed by the communication master ECU 40 of the communication master device 6 and the ECUs 21 and 25 - 27 of the in-vehicle apparatuses (the navigation apparatus 2, the CD player 3, the radio tuner 4, and the AV amplifier 5 in the first embodiment) in the power control system 1 according to the first embodiment will be described with reference to FIG. 4. FIG. 4 is a flowchart showing a power management processing program executed by the communication master device 6 and the in-vehicle apparatuses 2 - 5 according to the first embodiment. The power management control program here is a program for managing the powers of the in-vehicle apparatuses by communicating with each of the in-vehicle apparatuses connected to the communication network 7. Note that, the program in the flowchart of FIG. 4 is stored in the ROM and/or the RAM of each of the ECUs 21, 25 - 27, and 40, and the program is repeatedly executed by the CPUs in certain intervals.

First, the power management processing program executed by the CPU 41 of the communication master device 6 is described with reference to FIG. 4. In S21, the CPU 41 determines whether the key switch 15 is turned ACC on. When it is determined that the ACC is not on (S21=NO), the power management processing program is terminated.

When it is determined that the ACC is on (S21=YES), the CPU 41 starts transferring a data signal over the communication network 7 for turning on the power of the in-vehicle apparatus in S22. In S23, the CPU 41 transfers a connection acknowledgement request to each of the in-vehicle apparatuses (the navigation apparatus 2, the CD player 3, the radio tuner 4, and the AV amplifier 5 in the first embodiment) connected through the communication network 7.

In S24, the CPU 41 receives responses to the sent connection acknowledgment request in S23 from the in-vehicle apparatuses. In S25, IDs of in-vehicle apparatuses which responded to the connection acknowledgment request among all of the in-vehicle apparatuses are stored in the RAM 42. Therefore, it may be specified which in-vehicle apparatus is currently connected to the communication master device 6. Then the CPU 41 executes system communication processing such as a request for starting a control program for each of the connected in-vehicle apparatuses in S26.

In S27, the CPU 41 determines whether the key switch 15 is turned ACC off. When it is determined that the ACC is not off (S27=NO), the IDs of the in-vehicle apparatuses stored in the RAM 42 in S25 are initialized (S28), and the procedure returns to S23. Then the connection acknowledgment request is again transferred and the IDs of only in-vehicle apparatuses which respond to the request are stored.

As described above, the ECUs 21 and 25 - 27 of the in-vehicle apparatuses are set not to respond to the communication provided by the communication master device 6 when the series of program resets occurs a predetermined number of times (equal to or more than 11 times in the first embodiment) within a predetermined time period (60 seconds in the first embodiment) (S16 in FIG. 3). As a result, the in-vehicle apparatuses which are set not to respond to the communication provided by the communication master device 6 do not respond to the connection acknowledgement request, so that the CPU 41 does not recognize such in-vehicle apparatuses as the in-vehicle apparatuses connected to the communication master device 6 (that is, the CPU 41 assumes that such in-vehicle apparatuses do not exist).

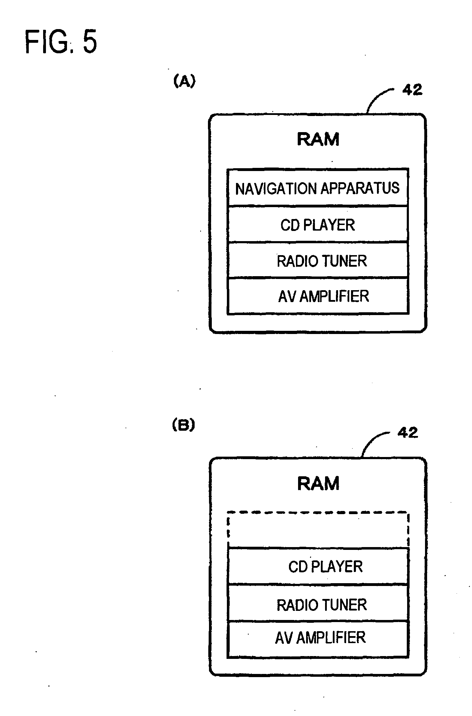

The recognition processing of the in-vehicle apparatuses which are connected to the communication master device 6 is concretely described with reference to FIG. 5. When the navigation apparatus 2, the CD player 3, the radio tuner 4, and the AV amplifier 5 respond to the connection acknowledgment request, the IDs of the in-vehicle apparatuses 2 - 5 are stored in the RAM 42 as shown in S25 in (A). The CPU 41 recognizes that the navigation apparatus 2, the CD player 3, the radio tuner 4, and the AV amplifier 5 are connected to the communication master device 6. When the navigation apparatus 2 is repeatedly reset and is set not to respond to the communication provided by the communication master device 6 (S16 in FIG. 3), the navigation apparatus 2 does not respond to the connection acknowledgement request since then. As a result, in S25, the IDs of the CD player 3, the radio tuner 4, and the AV amplifier 5 other than the navigation apparatus 2 are stored in the RAM 42 as shown in (B). The CPU 41 recognizes that only the CD player 3, the radio tuner 4, and the AV amplifier 5 are connected to the communication master device 6.

When it is determined that the ACC is off in S27 (S27=YES), the CPU 41 sends the power-off permission to each of the in-vehicle apparatuses connected through the communication network 7 (the navigation apparatus 2, the CD player 3, the radio tuner 4, and the AV amplifier 5 in the first embodiment) for determining whether the in-vehicle apparatuses are ready for turning off (S29).

In S30, the CPU 41 receives responses to the power-off permission in S29 sent from each of the in-vehicle apparatuses. In S31, it is determined whether all expected responses to the power-off permission are received from all in-vehicle apparatuses which responded to the connection acknowledgement request in S25. For example, when the IDs of the CD player 3, the radio tuner 4, and the AV amplifier 5 other than the navigation apparatus 2 are stored in the RAM 42, the CPU 41 determines whether the responses to the power-off permission from the CD player 3, the radio tuner 4, and the AV amplifier 5 are received. Note that, the processing in S31 is operated by power-off determining means.

When it is determined that the responses to the power-off permission from all of the in-vehicle apparatuses which responded to the connection acknowledgement request are not received (S31=NO), the CPU 41 waits until receiving all responses to the power-off permission. When it is determined that the all expected responses to the power-off permission from the in-vehicle apparatuses which responded to the connection acknowledgement request are received (S31=YES), the CPU 41 stops transferring the data signal over the communication network 7 to turn the in-vehicle apparatuses off (S32). As a result, the in-vehicle apparatuses connected to the communication network 7 are turned off. Note that, the processing in S32 is operated by power-off request means.

Next, the power management processing program executed by the CPUs of the in-vehicle apparatuses 2 - 5 connected to the communication master device 6 is described with reference to FIG. 4. In S41, the CPU determines whether the data signal sent from the communication master device 6 is received.

When it is determined that the data signal is received (S41=YES), the in-vehicle apparatus is turned on (S42). When it is determined that the data signal is not received (S41=NO), the power management processing program is terminated.

Another control processing is executed for the in-vehicle apparatus in S43. More specifically, for example, according to the navigation apparatus 2, a destination setting processing, a route search processing, and/or a route guidance processing along the set route are executed on the basis of the request from the communication master device 6. According to the CD player 3, a CD playing processing, a pausing processing, and/or a fast-forwarding processing are executed on the basis of the request from the communication master device 6.

In S44, the connection acknowledgement request sent from the communication master device 6 is received. In S45, the response to the connection acknowledgement request is sent to the communication master device 6, so that the communication master device 6 may specify which in-vehicle apparatus is currently connected to the communication master device 6.

In S46, the power-off permission sent from the communication master device 6 is received. In S47, the response to the power-off permission is sent to the communication master device 6, so that the communication master device 6 may determine whether the currently connected in-vehicle apparatus is ready for turning off. Note that, the processing in S47 is operated by power condition transferring means.

In S48, the CPU determines whether the data signal is no more transferred from the communication master device 6. When it is determined that the data signal is no more transferred (S48=YES), the corresponding in-vehicle apparatus is turned off (S49). When it is determined that the data signal is still transferred, (S48=NO), the CPU waits until the transfer of the data signal stops.

As described in detail above, according to the power control system 1 in the first embodiment, when it is determined that any one of the in-vehicle apparatuses (the navigation apparatus 2, the CD player 3, the radio tuner 4, and the AV amplifier 5) connected to the communication master device 6 is repeatedly reset and that the corresponding program is reset a predetermined number of times (equal to or more than 11 times in the first embodiment) within a predetermined time period (60 seconds in the first embodiment) (S15=YES), the in-vehicle apparatus is set not to respond to the communication provided by the communication master device 6 (S16). Meanwhile, when the communication master device 6 recognizes in-vehicle apparatuses which responded to the connection acknowledgement request as currently connected in-vehicle apparatuses (S25) and when it is determined that all expected responses to the power-off permission from all of the currently connected in-vehicle apparatuses are received (S31=YES), the communication master device 6 requests the in-vehicle apparatuses to turn off (S32). Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system may be turned off. As a result, the power-on state of the in-vehicle apparatuses may not continue after the vehicle engine stops and it may conserve the power of the vehicle's battery. The second embodiment

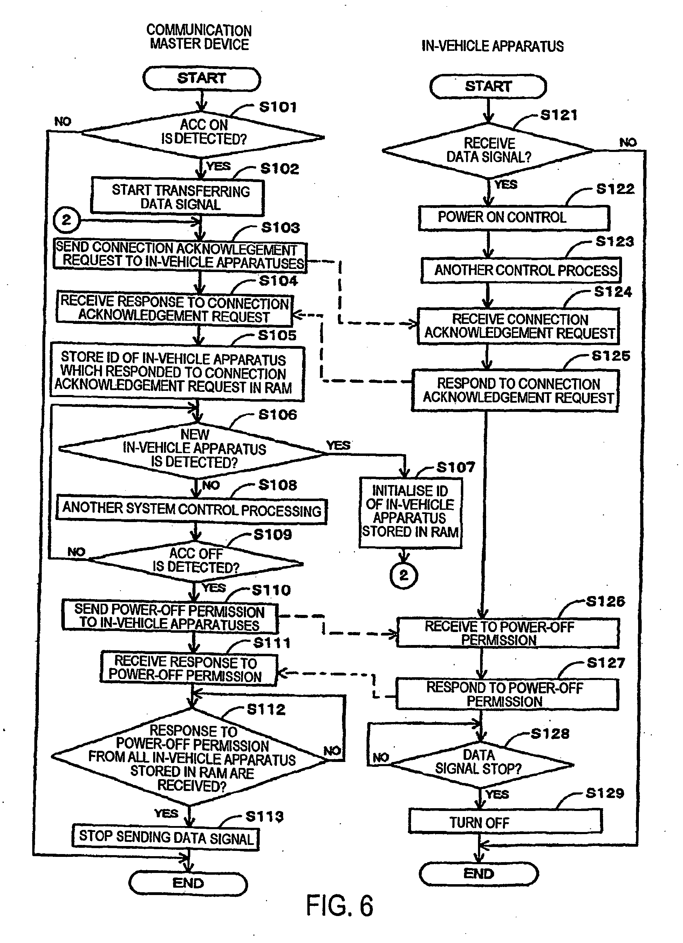

Next, a power control system for an in-vehicle apparatus in the second embodiment is described with reference to FIG. 6. Note that, the same reference numerals as the power control system 1 in the first embodiment in FIGs. 1 - 5 are applied for identical parts or corresponding parts of the power control system in the second embodiment.

There is not much difference between the structure outline of the power control system in the second embodiment and the structure outline of the power control system 1 in the first embodiment. Further, there is not much difference between various types of control processing in the second embodiment and the control processing of the power control system 1 in the first embodiment.

However, there is one difference between the power control system 1 in the first embodiment and the power control system in the second embodiment. The power control system 1 in the first embodiment regularly initializes IDs of in-vehicle apparatuses stored in the RAM 42 of the communication master device 6 regardless of whether or not abnormal communication occurs and re-recognizes which in-vehicle apparatus is connected to the communication master device 6 (S28). However, the power control system in the second embodiment initializes IDs of in-vehicle apparatuses stored in the RAM 42 of the communication master device 6 only when it is determined that a new in-vehicle apparatus is connected and re-recognizes which in-vehicle apparatus is connected to the communication master device 6.

A power management control program executed by the communication master ECU 40 of the communication master device 6 and the ECUs 21 and 25 - 27 of in-vehicle apparatuses (the navigation apparatus 2, the CD player 3, the radio tuner 4, and the AV amplifier 5 in the second embodiment) in the power control system in the second embodiment will be described with reference to FIG. 6. FIG. 6 is a flowchart showing the power management processing program executed by the communication master device 6 and the in-vehicle apparatuses 2 - 5 according to the second embodiment. Note that, the program in the flowchart of FIG. 6 is stored in the ROM and/or the RAM of the ECUs 21, 25 - 27, and 40 and is repeatedly executed by the CPUs in certain intervals.

First, the power management processing program executed by the CPU 41 of the communication master device 6 is described with reference to FIG. 6. In S101, the CPU 41 determines whether the key switch 15 is turned ACC on. When it is determined that the ACC is not on (S101=NO), the power management processing program is terminated.

When it is determined that the ACC is on (S101=YES), the CPU 41 starts transferring a data signal over the communication network 7 to request the in-vehicle apparatuses to turn on in S102. In S103, the CPU 41 sends the connection acknowledgement request to each of the in-vehicle apparatuses (the navigation apparatus 2, the CD player 3, the radio tuner 4, and the AV amplifier 5 in the second embodiment) connected through the communication network 7.

In S104, the CPU 41 receives responses to the request in S103 sent from the in-vehicle apparatuses. In S105, the IDs of the in-vehicle apparatuses which responded to the request among all of the in-vehicle apparatuses are stored in the RAM 42, so that it may be specified which in-vehicle apparatus is currently connected to the communication master device 6.

In S106, the CPU 41 determines whether any in-vehicle apparatus which is newly connected to the communication network 7 is detected. When the program reset occurs according to the in-vehicle apparatus connected to the communication network 7, the response to the connection acknowledgement request is sent to the communication master device 6 again to inform the connection of the in-vehicle apparatus. Therefore, when the program of any one of the in-vehicle apparatuses 2 - 5 connected to the communication master device 6 is reset, the communication master device 6 detects the new connection of the in-vehicle apparatus.

When it is determined that the connection of the new in-vehicle apparatus is detected (S106=YES), the IDs of the in-vehicle apparatuses stored in the RAM 42 in S105 are initialized (S107), and the procedure returns to S103. The connection acknowledgement request is again sent and the IDs of the in-vehicle apparatuses which responded to the request are registered.

When it is determined that the connection of the new in-vehicle apparatus is not detected (S106=NO), a system communication processing such as a request for starting control programs for the connected in-vehicle apparatuses is executed (S108).

In S109, the CPU 41 determines whether the key switch 15 is turned ACC off. When the ACC is not off (S109=NO), the procedure returns to the determination processing in S106 and it is further determined whether there is any in-vehicle apparatus which is newly connected.

When it is determined that the ACC is off (S109=YES), the power-off permission is sent to each of the in-vehicle apparatuses (the navigation apparatus 2, the CD player 3, the radio tuner 4, and the AV amplifier 5 in the second embodiment) connected through the communication network 7 for determining whether such in-vehicle apparatuses are ready for turning off (S110).

In S111, the CPU 41 receives the responses to the power-off permission in S110 sent from each of the in-vehicle apparatuses. In S112, it is determined whether all expected responses to the power-off permission from all of the in-vehicle apparatuses which responded to the connection acknowledgement request in S105 are received. For example, when the IDs of the CD player 3, the radio tuner 4, and the AV amplifier 5 other than the navigation apparatus 2 are stored in the RAM 42, the CPU 41 determines whether the responses to the power-off permissions from the CD player 3, the radio tuner 4, and the AV amplifier 5 are received.

When it is determined that all expected responses to the power-off permission from all of the in-vehicle apparatuses which responded to the connection acknowledgement request are not received (S112=NO), the CPU 41 waits until all expected responses are received. When it is determined that all responses to the power-off permission from all of the in-vehicle apparatuses which responded to the connection acknowledgement request are received (S112=YES), the data signal transfer over the communication network 7 stops to make the in-vehicle apparatuses turn off (S113), so that the in-vehicle apparatuses connected to the communication network 7 are controlled to turn off.

Note that, processing described in S121 - S129 executed by the CPUs of the in-vehicle apparatuses 2 - 5 connected to the communication master device 6 according to the power management processing program is same as the processing described in S41 - S49 executed by the CPUs of the in-vehicle apparatuses 2 - 5 according to the power management processing program of the power management system 1 according to the first embodiment (FIG. 4), so that a duplicated detail description thereof is not given herein.

As described above, according to the power control system of the second embodiment, when it is determined that any one of the in-vehicle apparatuses (the navigation apparatus 2, the CD player 3, the radio tuner 4, or the AV amplifier 5) connected to the communication master device 6 is repeatedly reset and that the program of the in-vehicle apparatus is reset a predetermined number of times (equal to or more than 11 times in the second embodiment) within a predetermined time period (60 seconds in the second embodiment), the in-vehicle apparatus is set not to respond to the communication provided by the communication master device 6. When the communication master device 6 recognizes only in-vehicle apparatuses which responded to the connection acknowledgement request as the currently connected in-vehicle apparatuses (S105) and when it is determined that all expected responses to the power-off permission from the connected in-vehicle apparatuses are received (S112=YES), the communication master device 6 requests the in-vehicle apparatuses to turn of (S113). Therefore, even if a series of program resets occurs by some sort of program factor or non-program factor (for example, when a system reset occurs due to a hardware error when just accessing a software) and there is an in-vehicle apparatus which does not send condition information indicating that the in-vehicle apparatus is ready for turning off to the power management device, the power management system ignores the existence of such in-vehicle apparatus, so that the power of the entire system may be turned off. As a result, the power-on state of the in-vehicle apparatuses may not continue after the vehicle engine stops and it may conserve the power of the vehicle's battery.

Note that, the invention is not to be construed as limited to the particular embodiments disclosed. Further, variations and changes may be made by others, and equivalents employed, without departing from the sprit of the present invention. For example, according to the first and the second embodiments, the navigation apparatus 2, the CD player 3, the radio tuner 4, and the AV amplifier 5 are described as the in-vehicle apparatuses mounted in the vehicle. However, such in-vehicle apparatuses used in the power control system 1 are not limited to the particular apparatuses described above. For example, an MD player, a DVD player, or an ETC device may be used.

Further, according to the first and the second embodiments, the power-off condition not to respond to the communication provided by the communication master device 6 is when the in-vehicle apparatus is reset a predetermined number of times within a predetermined time period.
However, if it is possible to determine that the in-vehicle apparatuses can not response to the power-off permission to the communication master device 6 for some reasons, another condition may be applied. For example, the condition is only that the program is reset a predetermined number of times.

Further, according to the first and the second embodiments, the system in which the communication master device 6 and the in-vehicle apparatuses 2 - 5 are connected to each other through the MOST is described as an example of the power control system for in-vehicle apparatuses. However, any system in which the communication master device 6 and the in-vehicle apparatuses 2 - 5 are connected to each other may be used. For example, a system in which the communication master device 6 and the in-vehicle apparatuses 2 - 5 are connected to each other through the LAN may be used. Further, as a communication method, an optical communication with the fiber, an electric communication with an electric signal, or a radio communication may be used.

When it is determined that any of in-vehicle apparatuses (a navigation apparatus, a CD player, a radio tuner, and an AV amplifier) connected to a communication master device is repeatedly reset and the program of the in-vehicle apparatus is reset a predetermined number of times (equal to or more than 11 times in a second embodiment) within a predetermined time period (60 seconds in a first embodiment), the in-vehicle apparatus is set not to respond to a communication provided by the communication master device.

### List of reference numbers:

FIG. 2
   - 2:: NAVIGATION APPARATUS
   - 21:: NAVIGATION ECU
   - 35:: RESET COUNTER
   - 34:: FLASH MEMORY
   - 22:: CURRENT POSITION DETECTION SECTION
   - 24:: MAP DB
   - 3:: CD PLAYER
   - 25:: CD PLAYER ECU
   - 4:: RADIO TUNER
   - 26:: RADIO TUNER ECU
   - 5:: AV AMPLIFIER
   - 27:: AV AMPLIFIER ECU
   - 6:: COMMUNICATION MASTER DEVICE
   - 40:: COMMUNICATION MASTER ECU
   - 9:: MONITOR DEVICE
   - 10:: CONTROLLER
   - 15:: KEY SWITCH
FIG. 3
   - S1:: LAST PROCESSING IS SUCCESSFULLY COMPLETED?
   - S2:: INITIALIZE RESET COUNTER CT CT=0
   - S3:: STORE CURRENT TIME OBTAINED BY RTC
   - S4:: COMMUNICATION CONTROL PROCESSING
   - S5:: NORMAL CONTROL PROCESSING FOR IN-VEHICLE APPARATUS
   - S6:: IN-VEHICLE APPARATUS IS RESET?
   - S7:: POWER OFF PERMISSION IS SENT?
   - S8:: POWER OFF PERMISSION RESPONSE TRANSMISSION IN RESPONSE TO COMMUNICATION MASTER DEVICE
   - S9:: DATA SIGNAL STOPS?
   - S10:: ACC OFF SEQUENCE RUN FLAG IS SET
   - S11:: POWER OFF CONTROL
   - S12:: STORE CURRENT TIME t OBTAINED BY RTC
   - S15:: CONDITION TO TURN OFF IS MET?
   - S16:: SET IN-VEHICLE APPARATUS NOT TO RESPOND TO COMMUNICATION MASTER DEVICE
   - S18:: STORE CURRENT TIME T OBTAINED BY RTC
   - S19:: INITIALIZE RESET COUNTER CT CT=1
FIG. 4
   - Z1:: COMMUNICATION MASTER DEVICE
   - S21:: ACC ON IS DETECTED?
   - S22:: START TRANSFERRING DATA SIGNAL
   - S23:: SEND CONNECTION ACKNOWLEDGEMENT REQUEST TO IN-VEHICLE APPARATUSES
   - S24:: RECEIVE RESPONSE TO CONNECTION ACKNOWLEDGEMENT REQUEST
   - S25:: STORE ID OF IN-VEHICLE APPARATUS WHICH RESPONDED TO CONNECTION ACKNOWLEDGEMENT REQUEST IN RAM
   - S26:: ANOTHER SYSTEM CONTROL PROCESSING
   - S27:: ACC OFF IS DETECTED?
   - S28:: INITIALIZE ID OF IN-VEHICLE APPARATUS STORED IN RAM
   - S29:: SEND POWER-OFF PERMISSION TO IN-VEHICLE APPARATUSES
   - S30:: RECEIVE RESPONSE TO POWER-OFF PERMISSION
   - S31:: RESPONSE TO POWER-OFF PERMISSION FROM ALL IN-VEHICLE APPARATUS STORED IN RAM ARE RECEIVED?
   - S32:: STOP SENDING DATA SIGNAL

   - Z2:: IN-VEHICLE APPARATUS START
   - S41:: RECEIVE DATA SIGNAL?
   - S42:: POWER ON CONTROL
   - S43:: ANOTHER CONTROL PROCESSING
   - S44:: RECEIVE CONNECTION ACKNOWLEDGEMENT REQUEST
   - S45:: RESPOND TO CONNECTION ACKNOWLEDGEMENT REQUEST
   - S46:: RECEIVE POWER-OFF PERMISSION
   - S47:: RESPOND TO POWER-OFF PERMISSION
   - S48:: DATA SIGNAL STOP?
   - S49:: TURN OFF
FIG. 5A
   - Z3:: NAVIGATION APPARATUS
   - Z4: CD: PLAYER
   - Z5:: RADIO TUNER
   - Z6:: AV AMPLIFIER
FIG. 5B
   - Z4:: CD PLAYER
   - Z5:: RADIO TUNER
   - Z6:: AV AMPLIFIER
FIG. 6
   - Z7:: COMMUNICATION MASTER DEVICE
   - S101:: ACC ON IS DETECTED?
   - S102:: START TRANSFERRING DATA SIGNAL
   - S103:: SEND CONNECTION ACKNOWLEDGEMENT REQUEST TO IN- VEHICLE APPARATUSES
   - S104:: RECEIVE RESPONSE TO CONNECTION ACKNOWLEDGEMENT REQUEST
   - S105:: STORE ID OF IN-VEHICLE APPARATUS WHICH RESPONDED TO CONNECTION ACKNOWLEDGEMENT REQUEST IN RAM
   - S106:: NEW IN-VEHICLE APPARATUS IS DETECTED?
   - S107:: INITIALIZE ID OF IN-VEHICLE APPARATUS STORED IN RAM
   - S108:: ANOTHER SYSTEM CONTROL PROCESSING
   - S109:: ACC OFF IS DETECTED?
   - S110:: SEND POWER-OFF PERMISSION TO IN-VEHICLE APPARATUSES
   - S111:: RECEIVE RESPONSE TO POWER-OFF PERMISSION
   - S112:: RESPONSE TO POWER-OFF PERMISSION FROM ALL IN- VEHICLE APPARATUS STORED IN RAM ARE RECEIVED?
   - S113:: STOP SENDING DATA SIGNAL

   - Z8:: IN-VEHICLE APPARATUS
   - S121:: RECEIVE DATA SIGNAL?
   - S122:: POWER ON CONTROL
   - S123:: ANOTHER CONTROL PROCESSING
   - S124:: RECEIVE CONNECTION ACKNOWLEDGEMENT REQUEST
   - S125:: RESPOND TO CONNECTION ACKNOWLEDGEMENT REQUEST
   - S126:: RECEIVE POWER-OFF PERMISSION
   - S127:: RESPOND TO POWER-OFF PERMISSION
   - S128:: DATA SIGNAL STOP?
   - S129:: TURN OFF

## Claims

1. A power management system for controlling at least one in-vehicle apparatus (1), including a power management device (6) for connecting to the at least one in-vehicle apparatus and managing the power on/off of the at least one in-vehicle apparatus, the at least one in-vehicle apparatus, comprising:
power condition transferring means (21 and 25-27) for transferring condition information indicating that the at least one in-vehicle apparatus is ready for turning off to the power management device;
**characterized by**
communication setting means (21 and 25-27) for setting the at least one in-vehicle apparatus not to communicate with the power management device, provided that the at least one in-vehicle apparatus does not send condition information indicating that the at least one in-vehicle apparatus is ready for turning off by the power condition transferring means; and
the power management device, comprising:
power-off determining means (40) for determining whether the at least one in-vehicle apparatus except in the case where the at least one in-vehicle apparatus is set not to communicate with the power management device, is ready for turning off when turning the at least one in-vehicle apparatus off;
power off request means (40) for requesting the at least one in-vehicle apparatus to turn off, provided that the power-off determining means determines that the at least one in-vehicle apparatus is ready for turning off,
counting means (21 and 25-27) for counting the number of program resets on the in-vehicle apparatus (2-5); and
reset number determining means (21 and 25-27) for determining whether a predetermined number of program resets occur during a predetermined time period on the basis of the counting means, wherein:
the communication setting means (21 and 25-27) sets the at least one in-vehicle apparatus not to communicate with the power management device, provided that it is determined that the predetermined number of program resets occurred within the predetermined time period.

2. The power management system for the at least one in-vehicle apparatus (1) according to Claim 1, wherein:
the communication setting means (21 and 25-27) sets the at least one in-vehicle apparatus not to respond to a communication from the power management device (6).

3. An in-vehicle apparatus (2-5) mounted on a vehicle that can be turned off on the basis of a request from a power management device (6), comprising:
power condition transferring means (21 and 25-27) for transferring information indicating that the in-vehicle apparatus is ready for turning off to the power management device;
**characterized by**
communication setting means (21 and 25-27) for setting the in-vehicle apparatus not to communicate with the power management device, provided that the in-vehicle apparatus does not send information indicating that the in-vehicle apparatus is ready for turning off by the power condition transferring means,
counting means (21 and 25-27) for counting the number of program resets; and
reset number determining means (21 and 25-27) for determining whether a predetermined number of resets occur during a predetermined time period on the basis of the counting means, wherein:
the communication setting means (21 and 25-27) sets the in-vehicle apparatus not to communicate with the power management device, provided that it is determined that the predetermined number of resets occurred within the predetermined time period.

4. The in-vehicle apparatus (2-5) according to Claim 3, wherein:
the communication setting means (21 and 25-27) sets the in-vehicle apparatus not to respond to the communication from the power management device (6).

## Patentansprüche

1. Energieverwaltungssystem zum Steuern zumindest einer fahrzeuginternen Vorrichtung (1), die eine Energieverwaltungseinrichtung (6) zum Verbinden mit der zumindest einen fahrzeuginternen Vorrichtung und Verwalten des Ein-/Ausschaltens der zumindest einen fahrzeuginternen Vorrichtung umfasst, wobei die zumindest eine fahrzeuginterne Vorrichtung Folgendes aufweist:
eine Energiezustandsübertragungseinrichtung (21 und 25-27) zum Übertragen von Zustandsinformationen, die anzeigen, dass die zumindest eine fahrzeuginterne Vorrichtung zum Ausschalten bereit ist, zu der Energieverwaltungseinrichtung;
**gekennzeichnet durch**
eine Kommunikationseinstelleinrichtung (21 und 25-27) zum Einstellen der zumindest einen fahrzeuginternen Vorrichtung, um nicht mit der Energieverwaltungseinrichtung zu kommunizieren, unter der Voraussetzung, dass die zumindest eine fahrzeuginterne Vorrichtung Zustandsinformationen, die anzeigen, dass die zumindest eine fahrzeuginterne Vorrichtung zum Ausschalten bereit ist, **durch** die Energiezustandsübertragungseinrichtung nicht sendet; und
die Energieverwaltungseinrichtung mit:
einer Ausschaltbestimmungseinrichtung (40) zum Bestimmen, ob die zumindest eine fahrzeuginterne Vorrichtung, außer für den Fall, dass die zumindest eine fahrzeuginterne Vorrichtung eingestellt ist, um nicht mit der Energieverwaltungseinrichtung zu kommunizieren, zum Ausschalten bereit ist, wenn die zumindest eine fahrzeuginterne Vorrichtung ausgeschaltet wird;
Ausschaltanforderungseinrichtung (40) zum Auffordern der zumindest einen fahrzeuginternen Vorrichtung, um Auszuschalten, unter der Voraussetzung, dass die Ausschaltbestimmungseinrichtung bestimmt, dass die zumindest eine fahrzeuginterne Vorrichtung zum Ausschalten bereit ist,
einer Zähleinrichtung (21 und 25-27) zum Zählen der Anzahl von Programmzurücksetzungen bezüglich der fahrzeuginternen Vorrichtung (2-5); und
einer Zurücksetzungsanzahlbestimmungseinrichtung (21 und 25-27) zum Bestimmen, ob eine vorbestimmte Anzahl von Programmzurücksetzungen während einer vorbestimmten Zeitdauer auf der Basis der Zähleinrichtung auftritt, wobei:
die Kommunikationseinstelleinrichtung (21 und 25-27) die zumindest eine fahrzeuginterne Vorrichtung einstellt, um nicht mit der Energieverwaltungseinrichtung zu kommunizieren, unter der Voraussetzung, dass bestimmt wird, dass die vorbestimmte Anzahl von Programmzurücksetzungen innerhalb der vorbestimmten Zeitdauer aufgetreten ist.

2. Energieverwaltungssystem für die zumindest eine fahrzeuginterne Vorrichtung (1) nach Anspruch 1, wobei:
die Kommunikationseinstelleinrichtung (21 und 25-27) die zumindest eine fahrzeuginterne Vorrichtung einstellt, um nicht auf eine Kommunikation von der Energieverwaltungseinrichtung (6) zu antworten.

3. Fahrzeuginterne Vorrichtung (2-5) die an einem Fahrzeug angebracht ist, die auf der Basis einer Aufforderung von einer Energieverwaltungseinrichtung (6) ausgeschaltet werden kann, mit:
einer Energiezustandsübertragungseinrichtung (21 und 25-27) zum Übertragen von Informationen, die anzeigen, dass die fahrzeuginterne Vorrichtung zum Ausschalten bereit ist, zu der Energieverwaltungseinrichtung;
**gekennzeichnet durch**
eine Kommunikationseinstelleinrichtung (21 und 25-27) zum Einstellen der fahrzeuginternen Vorrichtung, um nicht mit der Energieverwaltungseinrichtung zu kommunizieren, unter der Voraussetzung, dass die fahrzeuginterne Vorrichtung Informationen, die anzeigen, dass die fahrzeuginterne Vorrichtung zum Ausschalten bereit ist, **durch** die Energiezustandsübertragungseinrichtung nicht sendet;
eine Zähleinrichtung (21 und 25-27) zum Zählen der Anzahl von Programmzurücksetzungen; und
eine Zurücksetzungsanzahlbestimmungseinrichtung (21 und 25-27) zum Bestimmen, ob eine vorbestimmte Anzahl von Zurücksetzungen während einer vorbestimmten Zeitdauer auf der Basis der Zähleinrichtung auftritt, wobei:
die Kommunikationseinstelleinrichtung (21 und 25-27) die fahrzeuginterne Vorrichtung einstellt, um nicht mit der Energieverwaltungseinrichtung zu kommunizieren, unter der Voraussetzung, dass bestimmt wird, dass die vorbestimmte Anzahl von Zurücksetzungen innerhalb der vorbestimmten Zeitdauer aufgetreten ist.

4. Fahrzeuginterne Vorrichtung (2-5) nach Anspruch 3, wobei:
die Kommunikationseinstelleinrichtung (21 und 25-27) die fahrzeuginterne Vorrichtung einstellt, um nicht auf die Kommunikation von der Energieverwaltungseinrichtung (6) zu antworten.

## Revendications

1. Système de gestion de puissance pour commander au moins un appareil embarqué à bord d'un véhicule (1), comportant un dispositif de gestion de puissance (6) pour se raccorder à au moins l'appareil embarqué à bord d'un véhicule et gérer la mise en marche/arrêt de l'au moins un appareil embarqué à bord d'un véhicule, l'au moins un appareil embarqué à bord d'un véhicule, comprenant :
un moyen de transfert de condition de puissance (21 et 25-27) pour transférer des informations de condition indiquant que l'au moins un appareil embarqué à bord d'un véhicule est prêt à se mettre à l'arrêt au dispositif de gestion de puissance ;
**caractérisé par**
un moyen de réglage de communication (21 et 25-27) pour régler l'au moins un appareil embarqué à bord d'un véhicule de sorte à ne pas communiquer avec le dispositif de gestion de puissance, à condition que l'au moins un appareil embarqué à bord d'un véhicule n'envoie pas d'informations de condition indiquant que l'au moins un appareil embarqué à bord d'un véhicule est prêt à se mettre à l'arrêt par le moyen de transfert de condition de puissance ; et
le dispositif de gestion de puissance, comprenant :
un moyen de détermination de mise à l'arrêt (40) pour déterminer si l'au moins un appareil embarqué à bord d'un véhicule, à l'exception du cas où l'au moins un appareil embarqué à bord d'un véhicule est réglé de sorte à ne pas communiquer avec le dispositif de gestion de puissance, est prêt à se mettre à l'arrêt lors de la mise à l'arrêt de l'au moins un appareil embarqué à bord d'un véhicule ;
un moyen de requête de mise à l'arrêt (40) pour demander la mise à l'arrêt de l'au moins un appareil embarqué à bord d'un véhicule, à condition que le moyen de détermination de mise à l'arrêt détermine que l'au moins un appareil embarqué à bord d'un véhicule est prêt à se mettre à l'arrêt,
un moyen de comptage (21 et 25-27) pour compter le nombre de réinitialisations de programme sur l'appareil embarqué à bord d'un véhicule (2-5) ; et
un moyen de détermination de nombre de réinitialisations (21 et 25-27) pour déterminer si un nombre prédéterminé de réinitialisations de programme se produit durant une période prédéterminée sur la base du moyen de comptage, où :
le moyen de réglage de communication (21 et 25-27) règle l'au moins un appareil embarqué à bord d'un véhicule de sorte à ne pas communiquer avec le dispositif de gestion de puissance, à condition qu'il soit déterminé que le nombre prédéterminé de réinitialisations de programmes s'est produit dans la période prédéterminée.

2. Système de gestion de puissance pour l'au moins un appareil embarqué à bord d'un véhicule (1) selon la revendication 1, dans lequel :
le moyen de réglage de communication (21 et 25-27) règle l'au moins un appareil embarqué à bord d'un véhicule de sorte à ne pas répondre à une communication provenant du dispositif de gestion de puissance (6).

3. Appareil embarqué à bord d'un véhicule (2-5) monté sur un véhicule qui peut être mis à l'arrêt sur la base d'une requête venant d'un dispositif de gestion de puissance (6), comprenant :
un moyen de transfert de condition de puissance (21 et 25-27) pour transférer des informations indiquant que l'appareil embarqué à bord d'un véhicule est prêt à se mettre à l'arrêt au dispositif de gestion de puissance ;
**caractérisé par**
un moyen de réglage de communication (21 et 25-27) pour régler l'appareil embarqué à bord d'un véhicule de sorte à ne pas communiquer avec le dispositif de gestion de puissance, à condition que l'appareil embarqué à bord d'un véhicule n'envoie pas d'informations indiquant que l'appareil embarqué à bord d'un véhicule est prêt à se mettre à l'arrêt par le moyen de transfert de condition de puissance,
un moyen de comptage (21 et 25-27) pour compter le nombre de réinitialisations de programmes ; et
un moyen de détermination de nombre de réinitialisations (21 et 25-27) pour déterminer si un nombre prédéterminé de réinitialisations se produit durant une période prédéterminée sur la base du moyen de comptage, où :
le moyen de réglage de communication (21 et 25-27) règle l'appareil embarqué à bord d'un véhicule de sorte à ne pas communiquer avec le dispositif de gestion de puissance, à condition qu'il soit déterminé que le nombre prédéterminé de réinitialisations s'est produit dans la période prédéterminée.

4. Appareil embarqué à bord d'un véhicule (2-5) selon la revendication 3, dans lequel
le moyen de réglage de communication (21 et 25-27) règle l'appareil embarqué à bord d'un véhicule de sorte à ne pas répondre à la communication provenant du dispositif de gestion de puissance (6).
